# EUROPEAN PATENT APPLICATION

(11) **EP 2 434 401 A1**
(43) Date of publication of application: **28.03.2012**
(21) Application number: 10788825.7
(22) Date of filing: 26.05.2010
(51) Int. Cl.: G06F 9/46

(54) **METHOD AND SYSTEM FOR MANAGING THREAD POOL**

(30) Priority: 30.06.2009 CN 200910150745
(71) Applicant: ZTE Corporation, Shenzhen, Guangdong 518057 (CN)
(72) Inventor: WANG, Ping, Shenzhen Guangdong 518057 (CN)
(74) Representative: Manitz, Finsterwald & Partner GbR
(86) International application number: PCT/CN2010/073269
(87) International publication number: WO 2010/145429

(57) **Abstract**

A method for managing a thread pool, comprising: regularly traversing each thread in the thread pool to monitor the running duration of each thread for performing a current task; and when it is determined according to the monitored running durations that a thread runs overtime, creating a new thread for performing tasks that should be performed by the thread which runs overtime. The invention also provides a system for managing a thread pool. The present invention reduces the time period for performing the tasks in corresponding task lists, and can avoid to a certain degree a huge and long-time overstock of tasks, thereby improving running efficiency of application servers. In addition, by adding task monitoring mechanism, the thread running overtime may be discovered in time, and new threads may be created in time to replace the thread running overtime to perform tasks, thereby providing a thread reproduction mechanism and a fault-tolerance mechanism for the thread pool technology.

## Description

### Technical Field

The current invention relates to computer application technology in communication field, and especially to a method for managing a thread pool and a system thereof.

### Background of the Related Art

In an application based on object-oriented programming, creation and destruction of an object is time consuming, since memory resources or other more resources need to be obtained when creating the object. All the more so in an application based on JAVA programming technology, because a JAVA virtual machine (JVM) will try to track each object, so that system resources can be recovered after the object is destroyed.

In practical applications, it has been quite common in a server application based on object-oriented programming, especially in a WEB application that an application server responds to a client's request with thread technology. If the application server creates a thread for each request, the expense will be considerably large, since this will generate a large number of acts of creating and destroying threads, and cause the application server to spend a lot of time and system resources, even possibly more than the time and resources spent on handling actual user requests, on creating and destroying threads.

Besides the expenses on creating and destroying threads, the thread for an action also consumes system resources. If a JVM generates many threads in a short time, the system may be caused to lack resources due to excessive consumption of memory or excessive switching. To prevent the lack of resources, a server application program needs some schemes to limit the number of requests to be processed at any given time to reduce times for creating and destroying threads as much as possible. Especially for creating and destroying some threads with large resource consumption, it would be best that the service is made by using existing objects as much as possible. That is the reason for generation of the "thread pool" technology.

The thread pool technology makes the expense for creating threads be distributed to several tasks by reusing threads for various tasks. Its benefit is that the delay caused by creating threads is eliminated and the response of an application program is faster, since the thread already exists when a client's request arrives.

However, the existing thread pool management technology just maintains one group of process threads and one task list, and the process threads in the thread group are used to perform the tasks in the task list circularly. By using such thread management technology, once an exception occurs during the process of task performance, for example the time for a thread to perform a certain task is too long or the thread hangs dead, the efficiency of performing a task by the application server will be influenced. Since the application server continuously accepts requests from clients and makes service processing, the probability of occurrence of exceptions will increase as increasing requests. However, the existing thread pool management technology lacks corresponding monitoring or self-recovery capability, accordingly, the number of process threads in the thread pool of the application server will decrease gradually due to hanging dead of the threads, and the efficiency for performing tasks will also further decrease.

### Summary of the Invention

The embodiments of the invention provide a method for managing a thread pool and a system thereof to improve the task processing efficiency of an application server using the thread pool management technology and improve the reproducibility of the thread pool.

The method for managing a thread pool provided by an example of the invention comprises the following steps of:
regularly traversing each thread in the thread pool to monitor a running duration of each thread for performing a current task; and
when it is determined according to monitored running durations that a thread runs overtime, creating a new thread for performing tasks that should be performed by the thread which runs overtime.

Before the step of the newly created thread performing the tasks that should be performed by the thread which runs overtime, the method further comprises: clearing a detection count value corresponding to the thread;
the step of regularly traversing each thread comprises: in each period, traversing all threads in the thread pool one by one, and adding 1 unit value to the detection count value of the thread that has been traversed, judging whether the detection count value of the thread exceeds a threshold, if yes, considering the thread is running overtime; or else, considering the thread is not running overtime.
the threads in the thread pool one-to-one corresponding to task lists;
the method further comprises: each thread performing tasks in a corresponding task list;
the tasks that should be performed by the thread which runs overtime are tasks in the task list corresponding to the thread which runs overtime.

Before the step of the newly created thread performing the tasks that should be performed by the thread which runs overtime, the method further comprises: establishing a corresponding relation between the task list corresponding to the thread which runs overtime and the newly created thread, and replacing a corresponding relation between the task list and the thread which runs overtime with the newly established corresponding relation.

The threads one-to-one correspond to the task lists through thread identifiers and index values of the task lists;
the step of the thread performing tasks comprises: judging whether the thread identifier is consistent with the thread identifier corresponding to the index value of a current task list in the corresponding relation, if yes, delivering the tasks in the current task list to the thread according to first in first out mechanism, and using the thread to perform received tasks; if not, ending a flow for performing tasks.

Before the step of the each thread performing tasks in the corresponding task list, the method further comprises: obtaining identifiers of tasks to be assigned, and carrying out modulo operation on the obtained identifiers of the tasks and a number of the threads in the thread pool; assigning the tasks to be assigned to the task list whose index value is a result value of the modulo operation;
or, before the step of the each thread performing the tasks in the corresponding task list, the method further comprises: carrying out modulo operation on a total number of tasks currently assigned in the thread pool and the number of threads in the thread pool; and assigning the tasks to be assigned to the task list whose index value is the result value of the modulo operation.

Before the step of assigning the tasks to be assigned to the task list whose index value is the result value of the modulo operation, the method further comprises: judging whether a number of tasks in the task list whose index value is the result value of the modulo operation is smaller than a maximum number of allowed waiting tasks allowed, if yes, proceeding to the step of assigning the tasks to be assigned to the task list whose index value is the result value of the modulo operation.

A system for managing a thread pool in the embodiment of the invention, comprising:
a task list, which is configured to store tasks to be processed;
a task performing module, which is configured to use each thread to perform corresponding tasks; and
a task monitoring module, which is configured to regularly traverse each thread in the thread pool to monitor a running duration of each thread for performing a current task; and create a new thread when it is determined according to monitored running durations that a thread runs overtime, and instruct the task performing module to use the newly created thread to perform tasks that should be performed by the thread which runs overtime.
Threads in the thread pool one-to-one correspond to task lists;
the system further comprises:
   a corresponding relation storage module, which is configured to store corresponding relations between the task lists and the threads in the thread pool;
   the task performing module is configured to use each thread to perform tasks in a corresponding task list;
   the task monitoring module is configured to instruct the task performing module to use the newly created thread to perform the tasks in the task list corresponding to the thread which runs overtime.

The system further comprises:
a task assigning module, which is configured to obtain identifiers of tasks to be assigned, and carry out modulo operation on the obtained identifiers of the tasks and the number of the threads in the thread pool, and assign the tasks to be assigned to the task list whose index value is the result value of the modulo operation; or, carry out modulo operation on a total number of tasks currently assigned in the thread pool and the number of threads in the thread pool, and assign the tasks to be assigned to the task list whose index value is the result value of the modulo operation.

In the embodiments of the invention, whether there exists a thread of running overtime is confirmed by monitoring the running duration for performing a current task by each thread during the process of the thread performing tasks, if yes, a new thread is created and used to perform the tasks that should be performed by the thread running overtime, thereby reducing the time for performing the tasks in corresponding task lists, and to a certian degree, avoiding a huge and long-time overstock of tasks, and hence improving the running efficiency of an application server. In addition, by adding a task monitoring mechanism in the thread pool in the embodiments of the invention, the thread running overtime may be discovered in time, and new threads may be created in time to replace the thread running overtime to perform tasks, thereby providing a thread reproduction mechanism and a fault-tolerance mechanism for the thread pool technology.

### Brief Description of Drawings

FIG.1 illustrates the structure of the thread pool in an embodiment of the invention;
FIG.2 is a flowchart for assigning a task to a task list in an embodiment of the invention;
FIG.3 is a flowchart for delivering a task to a thread for performing in an embodiment of the invention;
FIG.4 is a flowchart for monitoring performance of a task in an embodiment of the invention.

### Preferred Embodiments of the Present Invention

In the embodiments of the invention whether a task is running overtime can be discovered by adding a function for monitoring task performing situation in the management functions of a thread pool in a computing device based on object-oriented programming. When a task is overtime, a new thread is created to perform the tasks corresponding to the thread running overtime, thereby improving reproducibility and task performing efficiency of the thread pool. The examples of the present invention will be described in detail below with reference to the accompanying drawings.

Usually, a thread pool mainly includes the following components:
a thread pool manager (ThreadPoolManager), which is used to create and query thread pools, i.e. maintain all the thread pools in an application program;
a thread pool implementation class (ThreadPoolImpl), which is used to maintain a thread pool, including creation, destruction, running monitoring, message overstock control and task alignment of each process thread and so on;
a process thread (ProcessThread): a thread object in a thread pool, which is used to perform tasks of a user, and whose number is determined by the variable of thread pool size (poolSize);
a task list (taskList), which is used to store waiting tasks and provide a cache mechanism;
a thread task (PoolTask), each task put in the thread pool for performance must inherit from the class, so that the process thread schedules task performance;
a task overstock controlling variable (maxWaitingTask): which is used to control the overstock of thread tasks to avoid system exception resulting from huge overstock of tasks.

The thread pool in the invention also includes these components, but some of the components are different form those in a conventional thread pool. For example, the thread pool manager in the examples of the present invention is only used to create and query thread pools, i.e. maintain all the thread pools in application programs, and not used to operate process threads; there may be a plurality of task lists in the examples of the present invention, each thread corresponds to a task list, and different threads correspond to different task lists.

The thread pool in the invention further has a function for monitoring task performance situation, this monitoring function may be implemented by the following components:
a regular task monitoring task (MonitorTask instance): which is used to check task running situation of a thread pool, and control the processing for thread reproducibility and exception of task operation;
a thread running control variable group (runThdIdx): which is used to control thread running and ensure the one-to-one correspondence between threads and task lists.

The above thread pool provides a uniform external interface new task (newTask), by scheduling which various kinds of applications put waiting tasks in the thread pool, and in which task assignment rules, by which each thread could be put in a task list, are provided.

The step of processing tasks with the above thread pool includes the following key flows:
a task assignment flow: in which waiting tasks are assigned to task lists, and task assignment is completed by scheduling the newTask interface. The newTask may determine a task list used to cache the task according to a task ID, thereby assigning waiting tasks to corresponding task lists; the newTask may also assign waiting tasks evenly to task lists not according to task Id. Thereafter, the newTask may further decide whether to accept a task according to the number of currently cached tasks in an object task list, thereby avoiding task overstock;
a task performing flow: the process thread takes out the task ranking the first from a corresponding task list to perform, i.e. delivers the tasks in the task list to corresponding process threads for performance according to first in first out mechanism, and waits when there is no task;
a task monitoring flow: the regular task monitoring task (checkTask) (MonitorTask instance) scans (or traverses) regularly all the threads in the thread pool, checks the current running duration of the thread for performing a task, and considers that a thread has hung dead if the current running duration of the thread for performing the task exceeds a certain limitation value, in which case information of the overtime task is recorded, and a new thread is created to process the tasks in the corresponding task list so as to avoid system exception resulting from huge and long-time overstock of tasks, thereby realizing functions of monitoring, fault-tolerance and thread reproducibility of the thread pool.

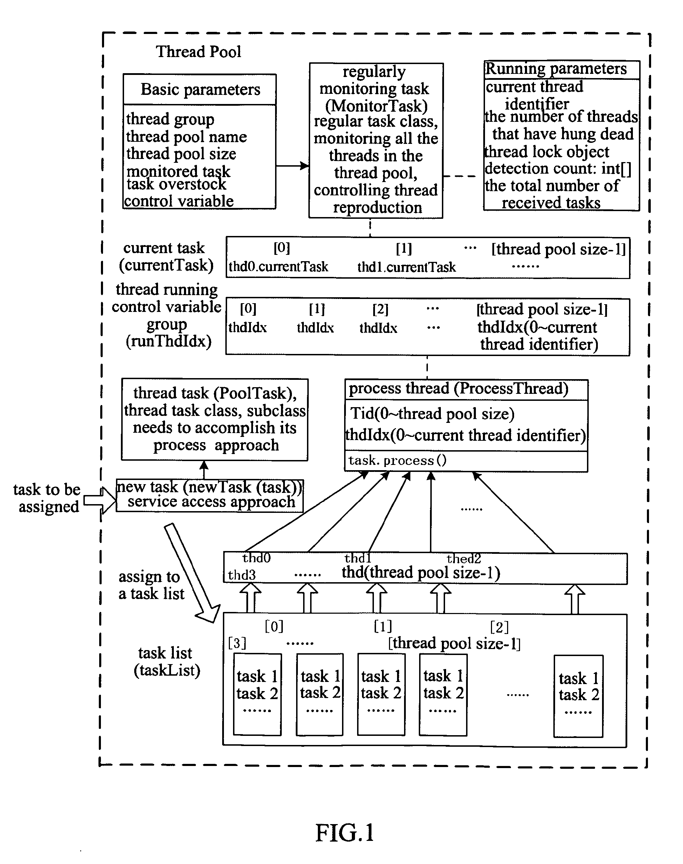

The thread pool structure and implementation process of the key method for the thread pool in the examples of the invention, including implementation processes of task assigning, task performing and task monitoring methods, will be described in detail below with reference to FIG.1, FIG.2, FIG.3 and FIG.4.

Referring to FIG.1, it illustrates the internal structure of the thread pool in an example of the present invention. As shown in the figure, the elements in the thread pool mainly include:
1. basic parameters, including:
   thdGroup: thread group;
   poolName: pool name;
   poolSize: pool size, i.e. the number of threads in the pool;
   checkTask: monitoring task, MnitorTask instance;
   max WaitingTask: the maximum number of waiting tasks allowed by a single task, which is used to control task overstock;
2. performance parameters, including:
   currentThdIdx: a current thread identifier, indicating the number of created threads, which includes the number of reproduced threads; in this example, the thread identifiers increase progressively according to the sequence of thread creation beginning from 0;
   deadThdNum: the number of threads hanging dead in the thread pool;
   thdLockObj: thread lock objects, used when variables are synchronized;
   check Count: int array, used to record the detection count number of each thread, and a thread is considered to have been hung dead and thread reproduce is needed if the detection count number of the thread exceeds a certain value; the elements in the array are recorded as checkCount[i], which indicates the detection count value of the thread with an identifier of i;
   addTaskCount: the total number of tasks received by the thread pool.
3. PoolTask: a thread task class, which should be inherited by all the tasks put in thread pool for processing, main methods including process(), get Task Name(), getTaskId();
4. ProcessThread: a thread class, including two basic variables, tid and thdIdx, wherein, tid (whose value is from 0 to poolSize-1) is the index of a thread in the thread pool, by which the thread obtains waiting tasks from corresponding task list (i.e. the task list with a list index value of tid), and thdIdx (whose is value is from 0 to currentThdIdx) is the unique identifier of a thread and can also indicate the position of the thread in the sequence of the threads created in the thread pool; the process method for the task is performed when the thread runs;
5. taskList: a thread pool task list array, wherein, each thread corresponds to a task list, each task list is a LinkedList instance, each task in the task list should inherit the PoolTask class, and first in first out mechanism is used; each task list has its index value, and the index value of each task list is unique in a thread pool;
6. currentTask: a PoolTask array variable, used to temporarily store the attribute information of the task being currently performed by each thread, so that attribute information of current running task, such as task name, task ID, etc., is obtained when the task runs overtime; elements in the array are recorded as currentTask[i], in which related information of the task currently performed by the thread with an identifier of i is recorded;
7. runThdIdx: an int array, used to store the corresponding relations between index values of thread task lists and thread identifiers in the thread pool, wherein, the task list index is consistent with the task identifier initially, for example, runThdIdx[2]=2 indicates that task performance thread for the task list with an index value of 2 (i.e. taskList[2]) is the thread whose thdIdx is 2, and when a certain task is overtime, the corresponding runThdIdx value will change;
8. newTask: a service access method by which an upper level's application puts waiting tasks in a thread pool, and which is responsible to assign tasks to specific task lists;
9. MonitorTask: a thread pool monitoring class, which inherits TimerTask and is used to monitor whether task running of each thread is overtime, and consider that a thread has hung dead when it is overtime and then create a new thread to perform the tasks in the corresponding task list, thereby realizing thread reproducible function.

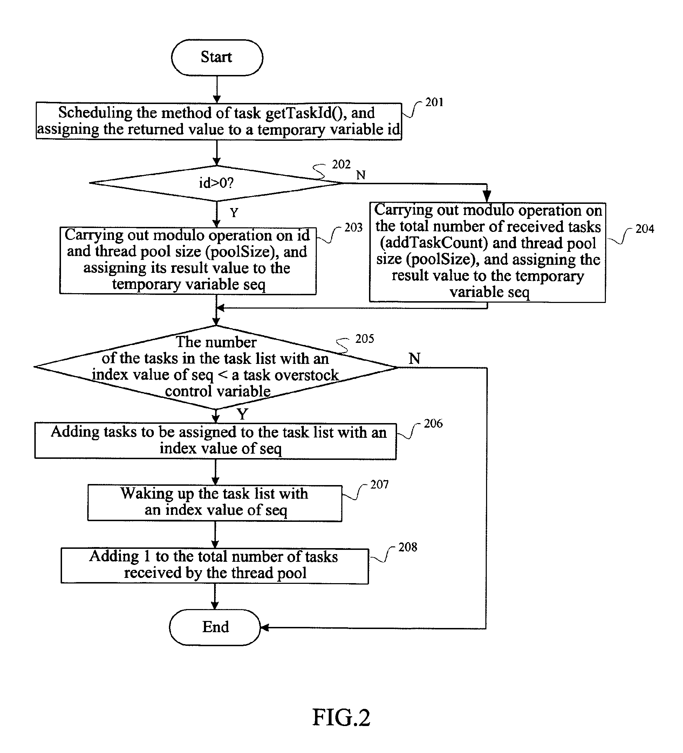

With reference to FIG.2, it is a flowchart of the newTask method in the example of the invention. The method is that an upper level's application accesses the entrance of the thread pool and simultaneously completes the function of task assignment. The entrance parameters include object instance task inheriting the PoolTask class, and the object instance task inheriting the method getTaskId() of PoolTask class. The main steps of the flow are described as follows.

Step 201, scheduling the method of task getTaskId(), and assigning the return value to a temporary variable of id. Through the step, the necessary parameters for subsequently determining the task assignment rule and further for task assignment process are provided.

The getTaskId() method in PoolTask class is defaulted to return -1. In this example, the task class inherited from the PoolTask may cover the method, in which case id is the default return value -1 for getTaskId() method, or not cover the method, in which case the id value is the Id of a waiting task obtained by getTaskId() method.

Step 202, judging whether id is greater than 0, and if yes proceeding to step 203; if not proceeding to step 204. The task assignment rules are determined by the step.

The id values returned by getTaskId() method has a corresponding relation with the task assignment rule. The task assignment rule needed for use is determined by the id value such that the newTask method assigns tasks according to the id value. Different value ranges of id (id>0 or id<0) correspond to different assignment rules.

Step 203, when id>0, carrying out modulo operation on id and poolSize, and assigning its result value to the temporary variable of seq (whose value indicates the index value of the object task list) to determine the object task list.

Step 204, when id<=0, carrying out modulo operation on addTaskCount and poolSize, and assigning its result value to the temporary variable of seq (whose value indicates the index value of the object task list) to determine the object task list.

Step 205, judging whether the number of tasks in the task list with an index value of seq is greater than the maximum number of allowed waiting tasks max Waiting Task, if it is smaller than maxWaitingTask, then proceeding to step 206; or else, refusing to receive the task and ending the flow by throwing the exception.

Through this step, the number of waiting tasks in the task list can be controlled within a certain amount, thereby avoiding task overstock which may influence processing efficiency of an application server.

Step 206, adding tasks to be assigned to a task list with an index value of seq.

Step 207, waking up the task list with the index value of seq.

Step 208, adding 1 unit value to the total number of tasks addTaskCount received by the thread pool. Wherein, the unit value may be 1.

It can be seen from the flow shown in FIG.2, tasks can be assigned evenly to each task list by using the result value of modulo operation of addTaskCount and poolSize as the index value of the object task list, and assigning tasks to the task list corresponding to the index value. When the result value of modulo operation on id (task Id) and poolSize is used as the index value of the object task list, and the tasks are assigned to the list corresponding to the index value, the task assignment is related to the task Id, and tasks with the same task Id will be assigned to the same task list and processed by the same thread. Therefore, an application may control the successive sequence for task performance by setting the task Id, for example, an application program may configure the tasks to be performed successively with the same Id, and put the tasks in one task list according to the successive sequence for performance, and control the successive sequence for performing the tasks according to first in first out mechanism.

With regard to the flow shown in FIG.2, it should be pointed out that the method for determining the index value of the target task index is not limited to the above algorithm, and for those skilled in the art, it is easy to conceive of other alternative algorithms. In addition, if the value range of id (id>0 or id<0) returned by the method getTaskId() is predicable, the step of judging the value rang of id may be skipped, and the task assignment rule corresponding to the value range of id may be directly used to assign tasks to task lists.

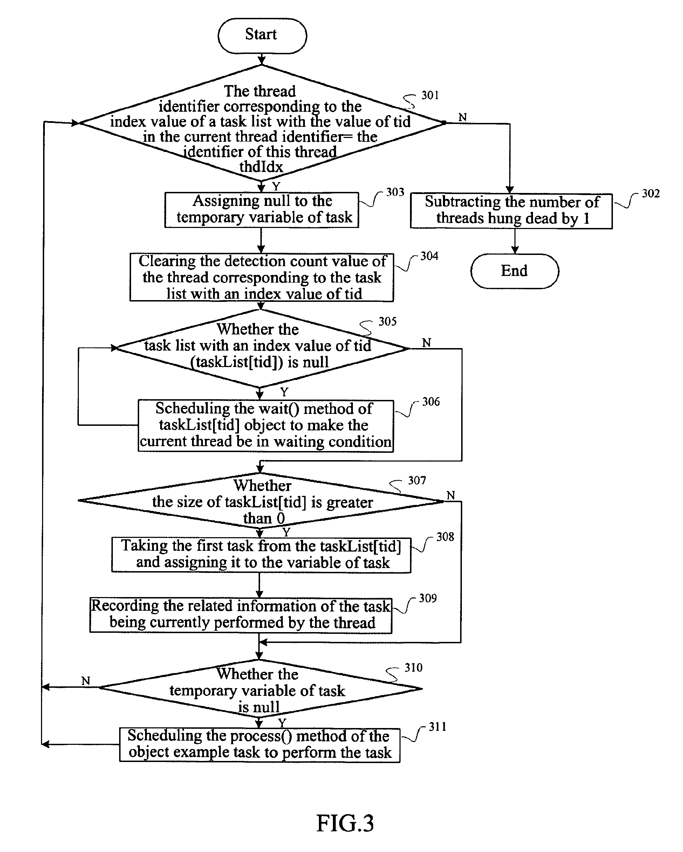

With reference to FIG.3, it is the flowchart of the run method of the ProcessThread class in the example of the invention. All the threads in the thread pool are instances of ProcessThread class, and the run method is an operation implemented by a thread, and the whole method is a process of circular judging and task performing, mainly including the following steps:
Step 301, judging whether the thread identifier corresponding to the index value of a task list with an value of tid in runThdIdx is consistent with thdIdx (thdIdx value is the identifier of the current thread). If not, it is indicated that the corresponding relation between the current thread identifier and the index value of the current task list is not consistent with the corresponding relation recorded in runThdIdx, and then proceed to step 302; if yes, it is indicated that the corresponding relation between the current thread identification and the index value of the current task list is consistent with the corresponding relation recorded in runThdIdx, and proceed to step 303.

Wherein, tid and thdIdx are basic variables of ProcessThread class, tid value indicates the index value of the current task list, and thdIdx value indicates the identifier of the current thread; runThdIdx is an int array, which stores the corresponding relation between the index value of the task list and thread identifier in a thread pool.

Step 302, subtracting the number of the threads that have hung dead deadThdNum by 1 unit value. Wherein, the unit value may be 1. The operation needs to use a variable of thdLockObj for synchronization, and thereafter running of the thread ends.

Step 303, assigning null (task=null) to the temporary variable of task to prevent the task value from being influenced by the circular value of the last time.

Step 304, assigning 0 to the checkCount[tid] of the checkCount array, i.e. clearing the checkCount value (detection count value) of the thread corresponding to the task list with an index value of tid, to indicate that the thread corresponding to the index value of the task list is running.

Step 305, judging whether the task list with an index value of tid (taskList[tid]) is null, if yes, proceeding to operation 306, or else, proceeding to operation 307.

Step 306, scheduling the wait() method of taskList[tid] object to make the current thread stay in waiting condition, till the thread is waken up by other threads through scheduling the notify() method of taskList[tid] object (for example, the step 207 for newTask), and proceeding to step 305 after the thread is waken up.

Step 307, judging whether the size of taskList[tid] is greater than 0; if yes, proceeding to step 308; or lese, proceeding to step 310.

Step 308, taking the first task from the taskList[tid] and assigning it to the variable of task.

Step 309, assigning the task to currentTask[tid] to record the attribute information of the tasks being currently performed by the thread. The step is optional.

Step 310, judging whether the temporary variable of task is null, if not, proceeding to step 311, or else, proceeding to step 301 and beginning the next circulation.

Step 311, scheduling the process() method of the object instance of task to perform the task, and then proceeding to step 301 to begin the next circulation.

Each thread judges and performs tasks circularly according to the flow shown in FIG.3, thereby delivering tasks in a task queue to the thread corresponding to the task list for performance. The thread is returned to the thread pool when all the tasks in the task list have been performed completely. The step 301 of judging step in the above flow is the key step for judging whether the thread continue to run, and it ensures that tasks are performed only when the corresponding relation between current thread and the current task list is consistent with the corresponding relation recorded in the runThdIdx, thereby ensuring the one-to-one corresponding relation between threads and task lists. In addition, since it needs to establish a corresponding relation between reproductive threads and corresponding task lists after the threads are reproduced, thereby performing the tasks in corresponding task lists using the reproductive threads , it is ensured, to a certain degree, that the tasks which should be performed by the thread whose task running is overtime may be performed by the reproductive threads and then end normally.

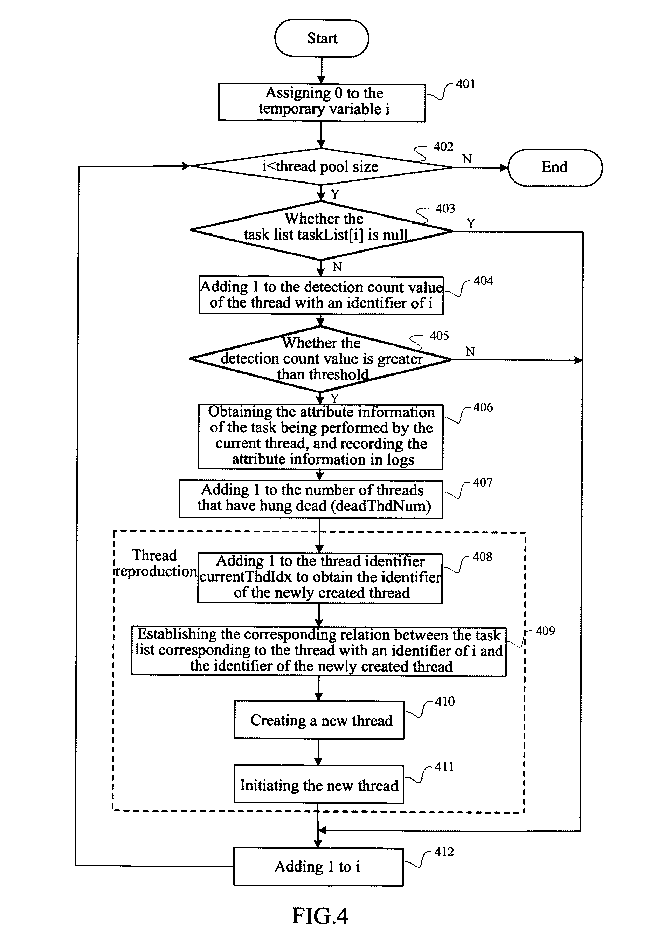

With reference to FIG.4, it illustrates the monitoring flow of MonitorTask in the example of the invention. The timer task checkTask in the thread pool is an instance of MonitorTask class, which is used to monitor all the threads in the thread pool so that thread reproduction is realized when the task is running overtime. The flow in each monitoring period mainly includes the following steps:
Step 401, assigning 0 to the temporary variable of i.
Step 402, judging whether i is smaller than poolSize. If yes, it is indicated that not all the threads in the thread pool have been traversed, and proceed to step 403; or lese, it is indicated that all the threads in the thread pool have been traversed and the current monitoring flow ends.
Step 403, judging whether the task list with an index of i taskList[i] is null. If yes, it is indicated that the thread has no waiting task, and no limitation of runtime is made for the task currently processed, and proceed to step 412; or else, proceed to step 404.
Step 404, adding 1 unit value to the detection count value checkCount[i] of the thread with an identifier of i. Wherein, the unit value may be 1.
Step 405, judging whether the checkCount[i] is greater than a predetermined threshold. If yes (for example, checkCount[i]>5), it is indicated that the current runtime of the task exceeds the detection periods of a given number, i.e. the task is running overtime, and proceed to step 406; or else (for example, checkCount[i]<5), proceed to step 412.
Step 406, taking out the task attribute information recorded in the currentTask[i] (the currentTask[i] records the attribute information of the task, which includes task name and task Id and so on, currently run by the thread with an identifier of i) and recording it in logs as basis for subsequent analysis on reasons for running overtime or further problem investigation. The step is optional.
Step 407, adding 1 to the number of threads that have hung dead deadThdNum. The operation needs to be synchronized with the variable of thdLockObj, and then proceed to the part of thread reproduction processing.
Step 408, adding 1 to the thread identifier currentThdIdx, and using the obtained value as the identifier of the newly created thread. Wherein, currentThdIdx indicates the number of created threads, i.e. the thread identifier with the maximum value, based on which the identifier of newly created thread increases progressively.
Step 409, assigning runThdIdx[i] to cunentThdIdx, i.e. establishing a corresponding relation between the task list corresponding to the thread with an identifier of i and the identifier of the newly created thread to replace the corresponding relation between the task list and the thread with identifier of i, to indicate that the tasks in the task list taskList[i] are to be processed by the reproduced thread currentThdIdx.
Step 410, creating a new thread, for which tid is i and thread identifier is currentThdIdx.
Step 411, initiating the new thread.
Step 412, adding 1 to i and then turning to step 402 to begin running condition detection of the next thread.

It can be seen from the combination of FIG.3 and FIG.4 that the detection count value corresponding to a thread may be used to characterize the duration for performing a current task by the thread (i.e. the runtime of the task) by clearing the detection count value checkCount corresponding to the thread before the thread begins to perform a received task and progressively increasing the detection count value checkCount corresponding to the thread during monitoring periods, and thereby whether the duration for performing the current task by the thread (i.e. the runtime of the task) is overtime can be judged through the detection count value of the thread. It can be seen from the flow shown in FIG.4, the timer task checkTask traverses the threads in the thread pool periodically, and the running duration of a certain thread is considered to be overtime when it is detected that the thread has not finished performing the current task when a given duration (a monitoring period duration x a threshold) times out, and further the thread is considered to have been hung dead, in which case, a new thread is created and the corresponding relation between the task list corresponding to the thread considered to have been hung dead and the newly created thread is established such that the newly created thread performs the tasks in the task list. Usually, since the time for performing a task by a thread is short, it is likely that an exception has arisen if the time used for performing the task by the thread exceeds a certain length. And too long a time used for performing the task by the thread will cause other tasks not to be performed timely, the speed for responding to a client's request will be delayed, and a huge and long-time overstock of tasks results in system exception of an application server, thus reducing the running efficiency of the application server. In the example, by using the newly created thread to replace the thread of running overtime to complete the tasks in corresponding task list, the time for performing tasks in the corresponding task list is reduced, and to a certain degree, huge and long-time overstock of tasks is avoided and the running efficiency of application servers is improved. In addition, by adding the task monitoring mechanism in the thread pool in the examples of the invention, the thread of running overtime may be discovered in time, and a new thread may be created in time to replace the thread of running overtime to perform the tasks, thereby providing a thread reproduction mechanism and a fault-tolerance mechanism.

With regard to the flow shown in FIG.4, it should be pointed out that: when traversing all the threads in the thread pool, the flow may be like the above flow which begins to traverse at the thread with the smallest identifier, or the flow begins to traverse at the thread with the largest identifier, or the flow traverses the threads in other sequences.

The above different flows may be accomplished by software codes respectively. Different flows may be performed by different modules. For example, the module corresponding to the task assignment flow shown in FIG.2 is a task assigning module, the module corresponding to the task performing flow shown in FIG.3 is a task performing module, and the module corresponding to the task monitoring flow shown in FIG.4 is a task monitoring module. Wherein, the task assigning module is realized by a thread task class PoolTask, the task performing module is realized by a thread class ProcessThread, and the task monitoring module is realized by a thread pool monitoring class MonitorTask. The thread pool management system in the example of the invention is constructed by the above code modules combined with the thread pool shown in FIG.1.

The system for managing thread pool in the example of the invention comprises a thread pool and a function module. Wherein:
the thread pool includes task lists (task lists are in one-to-one correspondence with threads in the thread pool) and a runThdIdx array (equivalent to a corresponding relation storage module which is used to store corresponding relations between task lists and threads, the corresponding relations are corresponding relations between identifiers of threads and index values of task lists);
the function module includes:
a task performing module, which is configured to use all threads to perform corresponding tasks; and
a task monitoring module, which is configured to traverse regularly all threads in the thread pool to monitor the running duration for performing a current task by each thread; and create a new thread when it is determined that a thread runs overtime according to monitored running durations, and instructd the task performing module to use the newly created thread to perform the tasks that should be performed by the thread which runs overtime.

The system may further comprise a task assigning module, which is configured to assign waiting tasks to the task lists in the thread pool.

The task assigning module may assign tasks in the following approach: obtaining identifiers of the waiting tasks, and carrying out modulo operation on the obtained identifiers of the tasks and the number of the threads in the thread pool, or carrying out modulo operation on the total number of tasks currently assigned in the thread pool and the number of the threads in the thread pool, and then assigning the waiting tasks to the task list whose index value is the result value of the modulo operation.

The performing processes of the above function modules and their functions have been described in the foregoing corresponding process flows, and thus will not be described here to avoid repetition.

What needs to be explained is, although all the above examples are described based on the assumption that threads in the thread pool are in one-to-one correspondence with task lists, the invention is not limited to such a corresponding relation between threads and task lists. For example, a plurality of threads may correspond to the same task list, thereby using a plurality of threads to perform the tasks in the task list.

In conclusion, the technology for managing a thread pool provided by the examples of the invention not only solves the problem of expense problem and resource lack problem in a thread life period, but also improves the working efficiency of servers, and meanwhile has a monitoring and fault-tolerant function, realizes thread reproduction and optional task assignment mechanism, and may help an application locate accurately the task of running exceptionally, thereby improving performance and stability of the application server.

Obviously, those skilled with the related art may make various modifications and variations without deviating from the spirit and scope of the invention. Thus, if such modifications and variations of the invention fall within the scope of the claims of the invention and equivalent technologies thereof, the invention is also intended to include the modifications and variations.

### Industrial Applicability

In the present invention, whether there exists a thread of running overtime is confirmed by monitoring the running duration for performing a current task by each thread during the process of the thread performing tasks, if yes, a new thread is created and used to perform the tasks that should be performed by the thread running overtime, thereby reducing the time for performing the tasks in corresponding task lists, and to a certian degree, avoiding a huge and long-time overstock of tasks, and hence improving the running efficiency of an application server. In addition, by adding a task monitoring mechanism in the thread pool in the embodiments of the invention, the thread running overtime may be discovered in time, and new threads may be created in time to replace the thread running overtime to perform tasks, thereby providing a thread reproduction mechanism and a fault-tolerance mechanism for the thread pool technology..

## Claims

1. A method for managing a thread pool, comprising:
regularly traversing each thread in the thread pool to monitor a running duration of each thread for performing a current task; and
when it is determined according to monitored running durations that a thread runs overtime, creating a new thread for performing tasks that should be performed by the thread which runs overtime.

2. The method according to claim 1, wherein,
before the step of the newly created thread performing the tasks that should be performed by the thread which runs overtime, the method further comprises: clearing a detection count value corresponding to the thread;
the step of regularly traversing each thread comprises: in each period, traversing all threads in the thread pool one by one, and adding 1 unit value to the detection count value of the thread that has been traversed, judging whether the detection count value of the thread exceeds a threshold, if yes, considering the thread is running overtime; or else, considering the thread is not running overtime.

3. The method according to claim 1 or 2, wherein,
the threads in the thread pool one-to-one correspond to task lists;
the method further comprises: each thread performing tasks in a corresponding task list; the tasks that should be performed by the thread which runs overtime are tasks in the task list corresponding to the thread which runs overtime.

4. The method according to claim 3, wherein,
before the step of the newly created thread performing the tasks that should be performed by the thread which runs overtime, the method further comprises: establishing a corresponding relation between the task list corresponding to the thread which runs overtime and the newly created thread, and replacing a corresponding relation between the task list and the thread which runs overtime with the newly established corresponding relation.

5. The method according to claim 3, wherein,
the threads one-to-one correspond to the task lists through thread identifiers and index values of the task lists;
the step of the thread performing tasks comprises: judging whether the thread identifier is consistent with the thread identifier corresponding to the index value of a current task list in a corresponding relation, if yes, delivering tasks in the current task list to the thread according to first in first out mechanism, and using the thread to perform received tasks; if not, ending a flow for performing tasks.

6. The method according to claim 3, wherein,
before the step of each thread performing tasks in the corresponding task list, the method further comprises: obtaining identifiers of tasks to be assigned, and carrying out modulo operation on the obtained identifiers of the tasks and the number of the threads in the thread pool; assigning the tasks to be assigned to the task list whose index value is a result value of the modulo operation;
or, before the step of each thread performing tasks in the corresponding task list, the method further comprises: carrying out modulo operation on a total number of tasks currently assigned in the thread pool and the number of threads in the thread pool; and assigning the tasks to be assigned to the task list whose index value is the result value of the modulo operation.

7. The method according to claim 6, wherein, before the step of assigning the tasks to be assigned to the task list whose index value is the result value of the modulo operation, the method further comprises: judging whether the number of tasks in the task list whose index value is the result value of the modulo operation is smaller than a maximum number of allowed waiting tasks, if yes, proceeding to the step of assigning the tasks to be assigned to the task list whose index value is the result value of the modulo operation.

8. A system for managing a thread pool, comprising:
a task list, which is configured to store tasks to be processed;
a task performing module, which is configured to use each thread to perform corresponding tasks; and
a task monitoring module, which is configured to regularly traverse each thread in the thread pool to monitor a running duration of each thread for performing a current task; and create a new thread when it is determined according to monitored running durations that a thread runs overtime, and instruct the task performing module to use the newly created thread to perform tasks that should be performed by the thread which runs overtime.

9. The system according to claim 8, wherein, threads in the thread pool one-to-one correspond to task lists;
the system further comprises:
a corresponding relation storage module, which is configured to store corresponding relations between the task lists and the threads in the thread pool;
the task performing module is configured to use each thread to perform tasks in a corresponding task list;
the task monitoring module is configured to instruct the task performing module to use the newly created thread to perform the tasks in the task list corresponding to the thread which runs overtime.

10. The system according to claim 9, further comprising:
a task assigning module, which is configured to obtain identifiers of tasks to be assigned, and carry out modulo operation on the obtained identifiers of the tasks and the number of the threads in the thread pool, and assign the tasks to be assigned to the task list whose index value is a result value of the modulo operation; or, carry out modulo operation on a total number of tasks currently assigned in the thread pool and the number of threads in the thread pool, and assign the tasks to be assigned to the task list whose index value is the result value of the modulo operation.
